Europäisches Patentamt

European Patent Office

Office européen des brevets

(11) Publication number: **0 262 276**
A1

(12) **EUROPEAN PATENT APPLICATION**

(21) Application number: **86402187.8**

(22) Date of filing: **03.10.86**

(51) Int. Cl.⁴: **A23J 3/00** , A23L 1/31

(43) Date of publication of application:
**06.04.88 Bulletin 88/14**

(84) Designated Contracting States:
**AT BE CH DE FR GB IT LI LU NL SE**

(71) Applicant: **MYOPLEX INTERNATIONAL CORPORATION**
**3108 Ocean Drive**
**Channel Islands California 93030(US)**

(72) Inventor: **Nguyen, Guy D.T.**
**1443 Barry Avenue 106 West Los Angeles**
**California 90025(US)**

(74) Representative: **Bouju, André**
**Cabinet Bouju 38 avenue de la Grande Armée**
**F-75017 Paris(FR)**

(54) **Meat analogue.**

(57) A process for preparing a foodstuff from vegetable protein and the product of that process. The product has a fibrous structure of natural muscle and the texture and appearance of meat. The process includes the steps of preparing a mixture of vegetable protein and water. The mixture is then heated and expanded. The expanded mixture is oriented by exerting pressure in two dimensions while permitting the mixture to move in the third dimension. The product is remarkably similar to natural meat having a macroscopic fiber structure comprised of parallel and cylindrical macroscopic fibers made of substantially aligned and cylindrical microfibrils. Moreover, both the macroscopic fibers and the microfibrils are substantially free of a reticlated or net-like structure.

EP 0 262 276 A1

## MEAT ANALOGUE

CROSS REFERENCE TO RELATED APPLICATIONS

This application is a continuation-in-part of applicant's application Serial No. 692,016 filed January 15, 1985, which in turn, was a continuation-in-part of applicant's application Serial No. 513,927 filed July 14, 1983 which, in turn, was a continuation-in-part of applicant's application Serial No. 352,076, filed February 25, 1982.

BACKGROUND OF THE DISCLOSURE

The field of the invention is foodstuffs and the invention relates more particularly to the production of meat analogue from vegetable protein and from reconstructed low grade meat as well as other protein sources. In spite of the intense amount of work carried out in the effort to make acceptable meat analogues, the resulting products only superficially resemble natural meat, and typically when the meat analogue is dried, the dried product has a cellular structure which cannot be easily re-hydrated. It is the absence of microfibrilar structure which makes the prior meat analogues difficult to dehydrate and extremely difficult to rehydrate. This severely limits the uses to which the prior art analogues may be put. The microstructure of a meat analogue determines whether the analogue possesses a meat-like quality such as consistency, moistness after re-hydration, mouth feel and tenderness. See, e.g. M. Kazemzadeh, J.M. Aguilera and K.C. Rhee, Use of Microscopy in the Study of Vegetable Protein Texturization, Food Technology, April 1982, 111-118.

On a macroscopic level, some natural meats have visually discernible muscle fibers which are cylindrically shaped and parallel. The microstructure of these fibers comprise myofibrils which, in earlier applications, were also referred to as fibers. The myofibrils have diameters that are in the range of micron size and also are cylindrically shaped and parallel. See e.g, J.A. Wilson, PRINCIPLES OF ANIMAL PHYSIOLOGY, Macmillan Company, New York (1972) 339-46.

Although there was a surge of interest in meat analogues in the 1960's when the price of meat increased dramatically, this interest has subsided and the failure to find a process which could produce a product with sufficient meat-like consistency at a reasonable cost contributed to this decline in interest. At the present time, three basic types of processes are utilized:

1. A spinning process, which is similar to the process used to manufacture rayon, where a vegetable dough protein is forced through a perforated dye or membrane, stretched and placed into an aqueous precipitation bath which contains a salt and an acid to form a fiber. The fibers are bundled together to form the finished product.

2. An extrusion process where a protein dough is forced through numerous small openings. The vegetable protein, flavor, water and other ingredients are mixed and fed into a cooker/extruder. The product is given different heating and pressure conditions as it is mechanically forced through the extruder and a finished meat analogue is formed.

3. The Ohyabu et al. process referred to in U.S. Patent 4,275,084.

The products of these processes are unlike natural meat in several important qualities. These products are unlike meat because they lack the fiber and the microfibrilar structures of meat. Their similarity to meat is only superficial and they have not been widely accepted by the public. Thus there is a need for a process for making a meat analogue which produces a product which is virtually indistinguishable from natural meat having meat-like macrofibers and preferedly also meat-like microfibrils, texture and appearance of natural meat. Moreover, this product should be available at a very low cost.

SUMMARY OF THE INVENTION

It is an object of the present invention to provide a process for producing a meat analogue from a vegetable protein which produces a product having the visually discernible macroscopic fiber structure as well as the microfibrils of meat, having the protein content of meat and being controllable as to fat and cholesterol levels. The visually discernible macroscopic fiber structure of the product of the present invention comprise products which appear to be composites of string-like fibers.

2

The present invention is for a process and for the product of that process. The first step in this process is for preparing a meat analogue from vegetable protein, which may also contain some animal protein, comprising the step of preparing a mixture containing at least about 10% gluten based upon the weight of the total dry ingredients, the balance of the dry ingredients being any other edible material, e.g. , animal material, vegetable material or a combination thereof including protein and fat. At least 25% of water is added to the dry mix in a manner effective to form a dough from the dry ingredients and water combination. Next, the dough is heated to about 100 degrees centigrade while permitting the mixture to expand by at least 35% in excess of its initial volume. Preferably, the expansion is carried out inside equipment having a configuration which permits the expansion to be followed, approximately immediately thereafter, by an orienting step. The final step comprises orienting the mixture by exerting pressure in two dimensions while allowing it to move in the third dimension. One way to obtain the desired steps is to force the expanded mixture through a conduit having a decreasing cross section which reduces the cross-section area of the mass of the mixture by at least one-fourth of its original cross-sectional area and having an angle in the decreasing cross section between about 10 degrees and 60 degrees with respect to the axis of the conduit. The outlet section should remain essentially unchanged for a length longer than the length of the decreasing cross section. The starting mixture, in addition to wheat gluten, may also contain either wheat or soy flour, preferably between about 5% and about 60% by weight of the dry ingredients, and a mixture having between about 5% and about 25%, by weight of the dry ingredients, soy flour provides a particularly excellent analogue for retorting, having an improved chewiness.

A product's rehydration index can be readily ascertained. The product is first dried, by any drying means, conventional or otherwise and then, a known weight of the dried product is immersed in a great excess, by weight, of room temperature water. Typically, about 2.5 gms of product will be immersed in more than 250 ml but less than 500 ml of room temperature water. The product is allowed to sit in the water, typically without agitation, for approximately 15 minutes. The product is then removed from the water and set on paper toweling to drain. Once drained, the moistened product is reweighed. The ratio of the products' increased weight (i.e. the products' moistened weight minus its initial dried weight) to the product's initial dried weight is its rehydration index. Products of the present invention typically have a rehydration index in excess of about 0.7. It is preferred that a product according to the present invention have a rehydration index in excess of about 1.0 and it is further preferred that these products have a rehydration index in excess of about 1.2. In fact, products of the present invention, after having been freeze dried to a moisture of less than about 7% have regularly rehydrated --i.e. they absorbed a quantity of water in excess of their weight after being freeze-dried --in less than about 5 minutes of immersion in room temperature water and frequently, the products of the present invention rehydrate in less than about 1 minute.

Additionally, the product of the present invention is readily dried to a moisture which inhibits microbial growth. The product may be dried by any drying method including open air, forced air and freeze drying.


BRIEF DESCRIPTION OF THE DRAWINGS

Figure 1 is a diagramatic view showing three steps of the process of the present invention, the first step being indicated as 1a, the second as 1b and the third as 1c.

Figure 2 is a perspective drawing of a myofibril of muscle fiber.

Figure 3 is a cross-sectional side view of an experimental apparatus useful for the practice of the process of the present invention.

Figure 4a is a photograph of natural chicken breast pieces.

Figure 4b is a photograph of pieces of chicken meat analogue made by the process of the present invention.

Figure 5 is a scanning electron photomicrograph of the longitudinal microfibrils of the meat analogue of the present invention at a magnification of 750 X enlarged to 3000 X.

Figure 6 is a scanning electron photomicrograph of the transversal myofibrils of the meat analogue of the present invention at a magnification of 750 X enlarged to 3000 X.

Figure 7 is a scanning electron photomicrograph showing an angled view of a sample of chicken meat structure at a magnification of 1,000 X.

Figure 8 is a scanning electron photomicrograph showing an angled view of the chicken meat analogue of the present invention at a magnification of 1,000 X.

Figure 9 is a transmission electron photomicrograph of the meat analogue of the present invention at a very high magnification.

Figure 10 is a scanning electron photomicrograph at 1000 X magnification of a product made from a dough which, on a dry ingredient weight basis, comprised approximately 10% wheat gluten and said dough was processed according to the process of the present invention.

Figure 11 is a scanning electron photomicrograph at 1000 X magnification of a product made form a dough which, on a dry ingredient weight basis, comprised approximately 15% wheat gluten and said dough was processed according to the process of the present invention.

Figure 12 is a scanning electron photomicrograph of an end section of a length of product made by the process of the present invention at a magnification of 1,500 x.

Figure 13 is scanning electron photomicrograph of the longitudinal microfibrils of a sample of product made by the process of the present invention at a magnification of 5,000 x.

Figure 14 is an enlarged view of Figure 13 at a magnification of 10,000 x enlarged to 40,000 X.

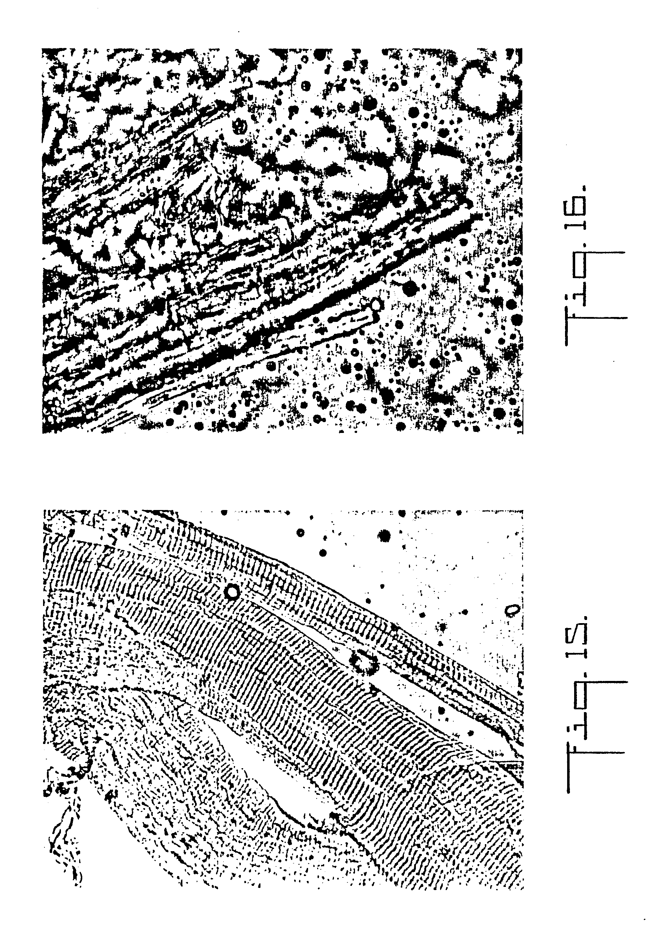

Figure 15 is a photomicrograph from a light microscope at 400 x magnification of a sample of beef.

Figure 16 is a photomicrograph from a light microscope at 400 x magnification of a sample of protein of the present invention.

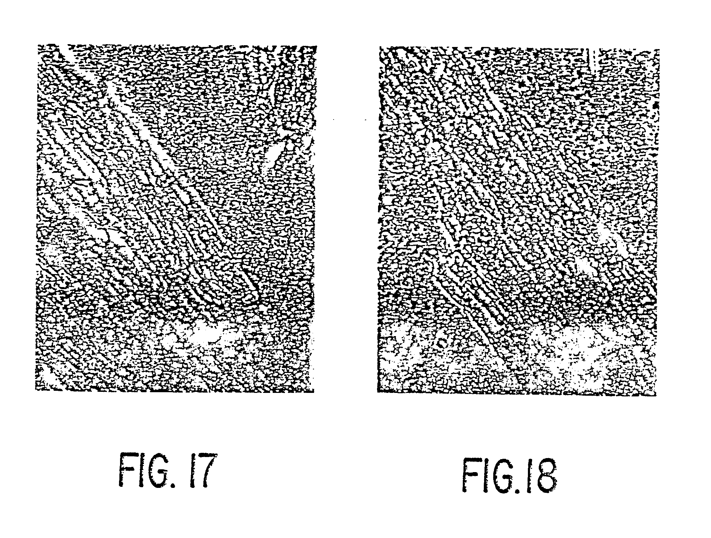

Figure 17 is a photomicrograph from a light microscope at 400 x magnification of a sample of chicken.

Figure 18 is a photomicrograph from a light microscope at 400 x magnification of a sample of the product of the present invention.

Figure 19 is a photograph of the product of Example 5 broken into two approximately equal pieces.

Figure 20 is a close-up photograph of the product of Example 5 showing both its outer surface and its cellular interior.

Figure 21 is a scanning electron photomicrograph at 100 x magnification of the product of Example 5.

Figure 22 is a scanning electron photomicrograph at 10,000 x magnification of the product of Example 5.

Figure 23 is a of the product of Example 6 broken into 2 pieces showing both the outer surface and the cellular interior of the product of Example 6.

Figure 24 is a scanning electron photomicrograph at 500 x magnification of the product of Example 6.

Figure 25 is a photograph of a piece of the product of Example 7 showing macroscopically discernable fibers which are both parallel and a-parallel as well as portions of this product which have a cellular or sponge structure.

Figure 26 is a photograph of a piece of the product of Example 7 showing macroscopically discernable fibers which are both parallel and a-parallel as well as portions of this product which have a cellular or sponge structure.

Figure 27 is a scanning electron photomicrograph at 500 x magnification of the product of Example 7.

Figure 28 is a scanning electron photomicrograph at 1000 x magnification of the product of Example 7.

Figure 29 is a photograph of the product of Example 8.

Figure 30 is a close-up photograph of the product of Example 8 where macroscopicly discernable fibers are readily apparent.

Figure 31 is a scanning electron photomicrograph at 100 x magnification of the product of Example 8.

Figure 32 is a scanning electron photomicrograph at 20,000 x magnification of the product of Example 8 showing microfibrils with diameters of about 1.5 microns.

Figure 33 is a transmission electron photomicrograph at 150,000 x magnification of the product of Example 8.

Figure 34 is a scanning electron photomicrograph at 100 x magnification of the 100 ml volumetric flask product of Example 8.

Figure 35 is a transverse scanning electron photomicrograph at 100 x magnification of the 100 ml volumetric flask product of Example 8.

Figure 36 is a scanning electron photomicrograph at 20,000 x magnification of the 100 ml volumetric flask product of Example 8.

## DESCRIPTION OF THE PREFERRED EMBODIMENTS

The process of the present invention begins with the formation of a vegetable protein mixture or dough which contains between about 10% and 100% of wheat gluten on a dry weight basis. It is believed that gluten is a key ingredient to the success of the present process and wheat gluten is a preferred gluten. A preferred amount of wheat gluten is at least about 15% of the dough's dry ingredients on a weight basis.

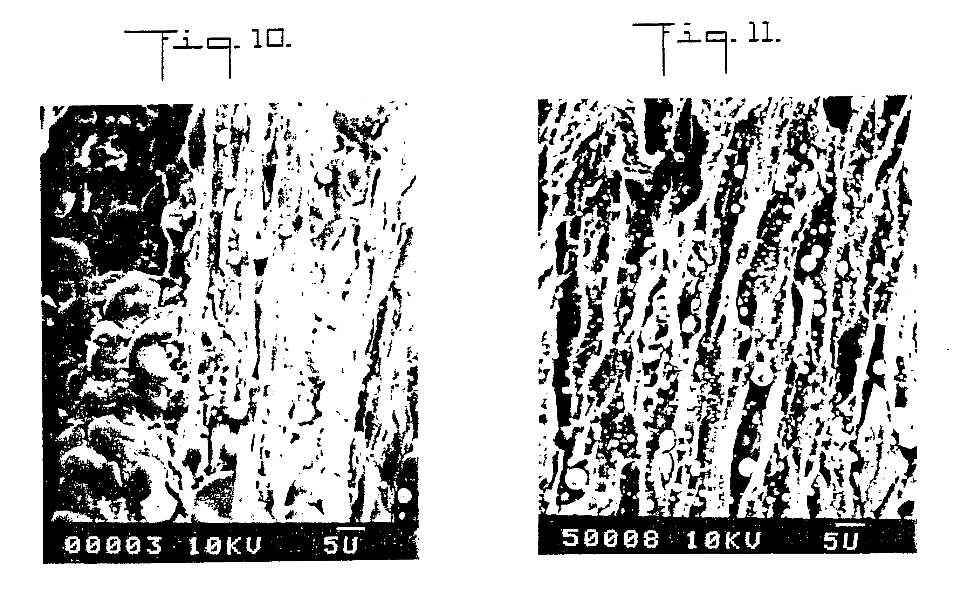

When the dry ingredients comprise about 10% wheat gluten, by weight of the dry ingredients, scanning electron microscopy (SEM) suggests that only a limited number if microfibrils are formed. See Fig. 10. When about 15%, by weight of the dry ingredients is wheat gluten, the SEM suggest the product comprises an abundance of microfibrils. See Fig. 11. Nonetheless, when the dry ingredients comprise at least about 36% wheat gluten, on a dry ingredient weight basis, the process of the present invention produces a product with a highly preferred microfibrilar structure. It is also preferred that wheat gluten on a weight basis, is less than about 70% of the dry ingredients. It is further believed that the gliadin, and in particular, alpha gliadin, and its interaction with glutenin is important for carrying out the process of the present invention. Other vegetable proteins can be used to provide the desired nutritional balance together with texture and flavor. In addition to vegetable proteins, low grade meat can be used and upgraded to an improved product in combination with the wheat gluten. Wheat flour is an ideal ingredient in combination with the wheat gluten and it comprises a source of additional wheat gluten. Of course, various flavorants, colorants, fat, oil and extenders may also be used. It has recently been discovered that by adding between about 5% and 25% of soy flour to the dry ingredients results in a particularly beneficial meat analogue. Such addition appears not only to improve chewiness but also improves resistance to degradation with retorting. It has previously been reported that a synergistic effect on protein efficiency ratio results from the combination of wheat gluten and soy flour. Furthermore, a product made from a wheat gluten and soy flour combination appears to retain excellent structural integrity when cooked or retorted. Soy flour, which is beneficial to the estimated Protein Efficiency Ratio (PER), although not essential, and improves the products ability to withstand severe moist heat conditions may be between about 0% and 60%, and preferably be between about 5% and about 25% by weight of the dry ingredients.

The vegetable protein mix combined with the above-described ingredients is mixed to form a moist mixture or dough containing at least 25% water, by weight of the total dry ingredient weight. The amount of water should not be so much that the mixture loses its structural integrity and becomes a slurry. On the other hand, a water content of less than about 25% generally tends to provide a very tough, dry dough which is difficult to mix. It is important that the mixture retain sufficient integrity so that the orientation step which will follow will cause the formation of elongated microfibrils of a type similar to the myofibrils found in natural meat. It has been found that up to 65% water in the final mixtures still permits the practice of the present invention although water levels of between 30% and 60% are preferred and water levels of between about 40% and about 50%, by total weight have provided a particularly ideal mixture. Other liquids may be used in place of water or in place of part of the water such as ethyl alcohol which saves energy be reducing the temperature required to cause expansion. Up to 10% of the water may be replaced by ethyl alcohol without adversely affecting microfibril formation. Above 10% of alcohol appears to reduce the quality of microfibril formation and is not recommended. In certain formulations, other gas producing agents may be added to increase the expansion of the dough. Baking powder is one such agent.

Various methods may be used to mix the dry ingredients and a ribbon blender operating between 100 RPM and 200 RPM has proved very satisfactory. Next, the water which preferably contains suspended or soluble flavors and colors is sprayed or otherwise mixed with the dry ingredients in a mixer such as a Hobart mixer. The flavor can alternatively be added by dipping or spraying after processing. The water content is increased to a level of at least 25% and up to 65% of the total mixture. The water is preferably at room temperature or slightly warmer and should be added slowly to provide a homogeneous mixture, and preferrably a homogeneous mixture without lumps. Alternatively, combining the dry ingredients with the water in a single step has proven effective to form a workable dough when these ingredients were mixed in a high speed mixer of about 900 RPM.

After mixing, the dough should be transferred to the expansion chamber without giving it too much relaxation time. The relaxation time should be less than about 6 hours and preferably the relaxation time is less than about 2 hours. If the relaxation time is too great, the process will produce a soft, cellular product and long relaxation times will also diminish the number of microfibrils formed. Nonetheless, remixing can effectively produce a new dough from a dough which has sat too long so long the dough has not begun to expand. The resulting mixture is a protein dough which is then transferred to a chamber which has provisions for heating the dough. Preferably, the dough transferred to the heating chamber is both strong and elastic. In other words, one should be able to stretch the transferred dough without the dough breaking, and one should be able to compress this dough without having to apply a great force. Moreover, the dough should hold together and stay in a ball when so formed. Furthermore, when heated, the dough ingredients should be homogeneously, distributed throughout the dough, the dough should have a uniform consistency and the dough should be free from lumps, granules or other particles.

In mixing the dough, a large quantity of air should be homogeneously incorporated into the dough so that the dough's density is low. Moreover, the to be heated dough should contain sufficient water so that the dough is neither too dry, hard and rubbery nor too wet, sticky and spongy.

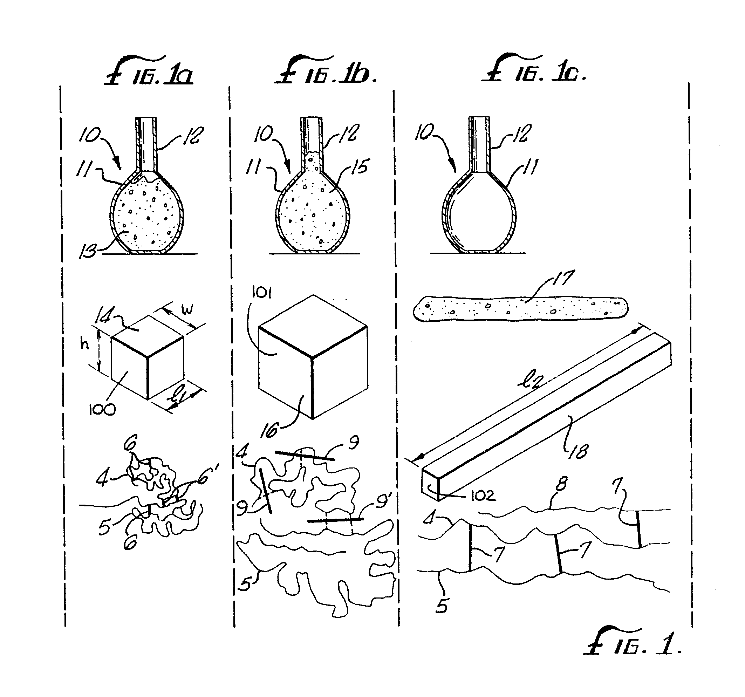

The chamber should be large enough to provide room for the dough to expand in three dimensions during the heating step. The term "free expansion" was used in applicant's parent applications but it is believed that this term is not sufficiently exact. For instance, the expansion step shown in Figure 1b is not truly a "free expansion" since the dough is confined in flask 10. Thus, the term "expansion in three dimensions" or "three dimensional expansion" is used herein and is intended to mean an expansion step which may be confined, as in the flask of Figure 1a but which permits an essentially unhampered expansion. In small scale laboratory operations, this may be carried out in a volumetric of Kjeldahl flask, and in production may be carried out in a chamber formed for this purpose. The container should provide homogeneous heat transfer as well as permit initial three dimensional expansion. A spherical chamber readily permits three dimensional expansion and heat transfer can be provided either by conduction from the outside of the container or by heat sources such as microwave heating. The outlet of the chamber has a smooth section which reduces in cross-sectional area to orient and shape the expanding mixture. The shape of the container is discussed more fully below. A continuous method can be provided by providing a conveyor for transporting the dough to the chamber continuously. The flow of the dough into and out of the chamber should be regulated so that sufficient time is provided to permit the dough to expand. A continuous method using an auger is also possible.

The three dimensional expansion of the process of the present invention can be visualized by reference to the unit volume dough cube 14 of Fig. 1a. As the dough temperature approaches the vapor point of the moisture in the dough, some of the moisture changes into water vapor and this phase change expands the unit volume dough cube in three dimensions, 16 of Fig. 1b. The three dimensional expansion of the unit volume dough cube occurs unhampered despite the boundaries which confine the macroscopic dough mass so long as said boundaries do not cause a substantial pressure increase within the dough mass. During the orienting step, the expanded unit volume dough cube --16--is compressed by at least 25% in two dimensions, e.g. along its height and width so that once compressed, the surface area of the oriented unit dough product faces --102--defined by the height and width edges of the orientated product derived from the unit dough cube are less than about 75% of the surface area of the unit volume dough cube's corresponding faces --100.

The amount of time that the dough is kept in the expansion chamber depends largely upon the time required to warm the dough to a temperature sufficient to both plasticize the dough and generate vapor throughout the dough substantially homogeneously. Typically, the dough is heated for between about one and about two and a half hours. Preferably the dough is heated to a temperature between about 80 and about to 130 degrees centigrade. It is important that the heat be introduced into the dough in such a way so that the dough is warmed relatively uniformly in order that the expansion will take place quite uniformly in the sample. If a portion of the dough is not sufficiently heated to cause expansion at the time it is shaped, then the necessary fiber and microfibril formation will be imperfect and the product will not have a uniform meat-like quality. Notwithstanding the relatively uniform dough heating, the process of the present intention may be carried out in a continous process wherein the heating of the dough at each stage of the process is relatively constant so as to produce a relatively uniform dough heating profile within the continuous process. The pressure in the chamber is preferably about atmospheric pressure, and the heating may be carried out by an oil bath, by radiation source as microwave or infra-red heating or by other conventional methods.

As the mixture is warmed to near 100 degrees centigrade, it begins to expand substantially because of the phase change of the water from liquid to a gas or vapor. If allowed, the dough will often expand to more than twice its original size, and within the dough surrounding those points in the dough where vapor is formed, the dough expansion is in three dimensions. After expansion, no further heat need be added, and in most of the early experiments carried out, no further heat was added after expansion. It is also important in the practice of the present invention that the dough be allowed to expand initially in three dimensions relatively freely and not excessively inhibited by the apparatus in which it is confined during the beginning expansion step. The amount of initial free expansion should be at least 35% in excess of original volume.

The next step in the process is the orienting step which is carried out by exerting pressure in two dimensions while allowing the dough to move in the third dimension. This may be carried out by expanding dough in a spherical chamber, the outlet of which has a smooth section which reduces in the cross-sectional area. As the dough fills the sperical portion of the chamber, it is then forced into the smooth reduced cross-sectional area section of the chamber and further expansion can push the entire dough mass out of the sperical section through the neck or reduced cross-sectional area section of the chamber. Continuous methods may be provided by using a conveyor with decreasing cross-sectional area to orient the fibers and microfibrils or by the multi-section auger screw reactor discussed below.

The steps of the process are shown schematically in Figure 1 of the drawings. A flask 10 has a sperical portion 11 and a cylindrical neck 12. The relationship of the size of the neck as compared to the size of the sperical portion is discussed more fully below but in general it is sufficient that the sperical portion be large enough to permit an initial expansion of at least 35% and the neck portion should be small enough to substantially elongate and the orient protein mass.

The protein mass or dough which is a mixture of dry protein including at least about 10% wheat gluten, by weight of the dry ingredients, together with water and possibly other solvents is indicated by reference 13. In Figure 1a, protein mass 13 is unexpanded. That is, it is the size which results from merely adding water to the dry protein ingredients. A unit volume of the protein dough --14--is shown in the middle portion of Figure 1a. In step 2 shown in Figure 1b, the protein mass has been heated to about 100 degrees centigrade which causes the dough to expand at least 35% in excess of its original volume and preferably about 50% to 100% in excess of its original volume.

While not wishing to be bound by any theory, it is believed that enough energy is added so that the intramolecular bonding in the protein molecule and the intermolecular bonding between different protein molecules is broken such as sulphur to sulphur bonds, sulphur to hydrogen bonds, and hydrogen to hydrogen bonds. The protein molecule is then free to become oriented in a unidirectional manner. As indicated in the lower portion of Figure 1a, molecular chain 4 has intramolecular bonds 6 and is linked to molecular chain 5 by bonds 6 which are intermolecular bonds. The pressure exerted in two dimensions, as in the movement through the neck 12 of flask 11, pushes the protein molecules closer together. The long chain protein molecules are aligned in a unidirectional manner and are forced close enough together to produce intermolecular interactions between different protein molecules.

At these conditions, new intermolecular bonding (such as sulfur to sulfur, sulfur to hydrogen, or hydrogen to hydrogen) forms creating long chain protein microfibrils having a diameter in the order of micron size. After expansion of the unit volume dough cube 14 to the expanded cube 16, as shown in Figures 1a and 1b, the intramolecular bonding is broken at the point indicated by heavy lines 9 and the molecules are now capable of being re-oriented. Heavy line 9 indicates the broken intermolecular bonding between molecules 4 and 5. In figure 1c, the molecules have been realigned and new intermolecular bonds 7 are formed between molecules 4, 5 and 8. The resulting product has elongated fibers of myo-or microfibrils having diameters in the range of micron size (from about one tenth to about 30 microns, preferably less than about 15 microns, and most preferably between about one tenth and about 10 microns). It is believed that the breaking of the intermolecular bonds frees the cross-linked protein chains leading to an overall expansion in volume. After the intermolecular bonding between protein chains has been broken, it is important that the dough be reoriented by elongating the expanded dough in one dimension while confining it in the other two dimensions. It is believed that new intermolecular bonding (e.g. , S-S, S-H, H-H) between the different elongated chain molecules forms which creates the microfibrils. These microfibrils are bound together to form visually discernible fibers. The fibers, in turn, form a composite of bundles of fiber which conforms to the shape of the orienting apparatus' aperture or neck. This composite may be separated into smaller bundles comprising any fraction of the orientating apparatus' aperture or neck.

The new intermolecular bonding tends to stabilize the oriented microfibrils so that further heating, such as boiling, cooking or retorting of the product, does not cause the oriented microfibrils to revert into an unstructured dough or into the product's former state. Both the macroscopic fiber and the microfilbrilar structure of the product of the present invention tolerate heating. When the product of the present invention is heated, it retains its meat-like appearance: its fibrous structure and consistency. When heated, the microfibrils of the product of the present invention stay intact and do not readily disintegrate. Furthermore, the product maintains its visually discernible macroscopic fiber structure. While the product of the present invention maintains its integrity and shape, it does, when cooked in an aqueous environment, absorb water. However, when the product is cooked at about atmospheric pressure for less than about 30 minutes, the water absorbed by the product of the present invention does not cause the product's volume to increase by more than about 15%. In addition, preferably the product of the present invention will not lose its meat-like appearance although it may expand when it is retorted at 240° for about 100 minutes, and more preferably the product of the present invention will not lose its meat-like shape and appearance when it is retorted at 240° for about 150 minutes.

The microfibrilar density of a product is the number of microfibrils per unit. One measure of the microfibilar density is to ascertain whether in a a square of about four square centimeters of an SEM (taken at between about 100X and about 1000X) of a product, which square appears to be resensitive of the product structure, the percentage of the SEM which is occupied by microfibrils is at least about 50%. If the percentage of the SEM which is occupied by microfibrils is at least about 50%, then the product has a high microfibril density. Otherwise, presuming that the product has microfibrils, the product has a low microfibril density. It is believed that a high microfibril density improves a product's ability to withstand degration when exposed to moist heat. It is further believed that one way to obtain high microfibril density in a product is by increasing the ratio of expansion to compression of the process of the present invention. A large expansion to compression ratio is also believed to result in microfibrils which have a smaller diameter.

It has been observed that increasing the percentage of the dry ingredients that is soy flour also makes the produce together and more able to withstand degration when exposed to moist heat. Thus, if a product which is able to withstand considerable moist heat is desired, it is preferred that the produce comprise about 25%, by weight of the dry ingredients soy flour and have a high microfibrilar density.

Moreover, the product of the present invention is stable when heated, without the addition of agents to stabilize or bind the product in bundles of microfibrils.

The product of the present invention's ability to maintain its meat-like appearance when heated is independent of the products' geometry including the geometry of a bundle of microfibrils of the present invention. For convience, the ability of a textured vegetable protein to retain its texture when heated can be expressed in terms of the cross-sectional area and the length of the textured vegetable protein that will maintain the textural properties after the product is heated at about 100°C for about 30 min; the product's cross-sectional area stability index and its length stability index. Thus, if a portion of a product has a microfilbril bundle cross-sectional area in excess of 20mm² and said portion of the product maintains its texture or appearance when it is heated to a temperature in excess of about 100°C for at least about 30 minutes, the product from which that portion was taken has a cross-sectional area stability index in excess of 20mm². Likewise, if a portion of a product with a microfibril bundle cross-sectional area in excess of 1cm² maintains its texture or appearance when heated to in excess of about 100°C for at least about 30 minutes, then the product has a cross-sectional area stability index in excess of about 1cm², and if a portion of product with a microfilbril bundle cross-sectional area in excess of 2cm² maintains its texture or appearance when heated to about 100°C for about 30 minutes, then the product has a cross-sectional area stability index of at least about 2cm². Bundles of microfibrils of the present invention are heat stable --do not revert to unstructured dough or otherwise disintegrate--when the bundles have a cross-sectional area in excess of about 20mm², in excess of about 1cm², or even in excess of about 2cm².

Similarly, if a 30mm or longer portion of a product maintains its appearance when heated at about 100°C for at least about 30 minutes, then the product has a length stability index of at least 30mm. If a 10cm or longer portion of a product maintains its appearance when heated to about 100°C for about 30 min, then the product has a length stability index of at least 10cm. The product of the present invention maintains its meat-like appearance of visually discernible macroscopic fibers and bundles of microfibrils when portions of the product with a length in excess of about 30mm as well as when these fibers and microfibril bundles are in excess of about 10cm are heated to 100°C at least 30 minutes.

The microfibrils of the products of the present invention are most apparent when the product is examined by scanning electron microscopy (SEM). Under SEM, when the product of the present invention is viewed in a non-cross-sectional plane, the product comprises a plurality of string-like components. These string-like components are the microfibrils and have diameters in the micron range. Generally the microfibrils are cylindrically shaped, although some microfibrils appear like a string with frayed pieces.

Additionally, the microfibrils are substantially aligned in the same direction. The product of the present invention, under SEM, may also comprise voids and globules each with diameters in the micron range. Moreover, where SEM of the product of the present invention reveals a sheet-like appearance, said sheet-like appearance comprises microfibrils which are aligned in the same direction and form a composite.

Furthermore, transmission electron microphotographs of the product of the present invention taken at about 100,000 to about 160,000 times magnification reveals a plurality of approximately straight lines which are substantially aligned. These straight lines are, preferably, approximately uniform in diameter, length, shape and in inter-line spacing. This uniformity in the transmission electron microphotographs suggest that the internal structure of the microfibrils of the product of the present invention is highly organized. Moreover, the transmission electron microphotograph may further comprise a plurality of groups of approximately straight lines which are substantially aligned.

8

The protein dough is an expanded condition as shown in figure 1b where the dough is indicated by reference character 15. According to the process of the present invention, dough unit 14 is expanded by at least 35% expanded and is shown in its expanded condition in Figure 1b and indicated by reference character 16. As can be seen by dough 15, the spherical portion of flask 10 has been essentially filled with the dough so that a portion of the dough has begun to enter the neck 12 of flask 10.

The orienting step may be carried out in many different ways which cause the dough to be confined in two dimensions while permitting it to expand in the third dimension. One simple laboratory procedure for carrying this out is shown in Figures 1a through 1c where the confined dough having filled the spherical portion 11 of flask 10 is actually forced completely out of the flask through neck 12. While the bulk of the product is gradually forced out of the flask, the expulsion of the final dough portion can often happen in a very rapid manner almost in the nature of an explosion. This protein mass is shown in Figure 1 and indicated by reference character 17. The unit volume of protein dough 14 is indicated by reference character 18 in its expanded and oriented configuration. Unit 18 is the meat analogue of the present process which has been remarkably converted to a meat-like fibrous product, i.e. it has a visually discernible macroscopic fiber structure which is stable and useful as a meat substitute. The reduction from the expanded cross-sectional area to the reduced cross-sectional area should be such that the reduced area is at least 25% less than the original area. It is believed that the greater the reduction in area, the greater the density of the final product.

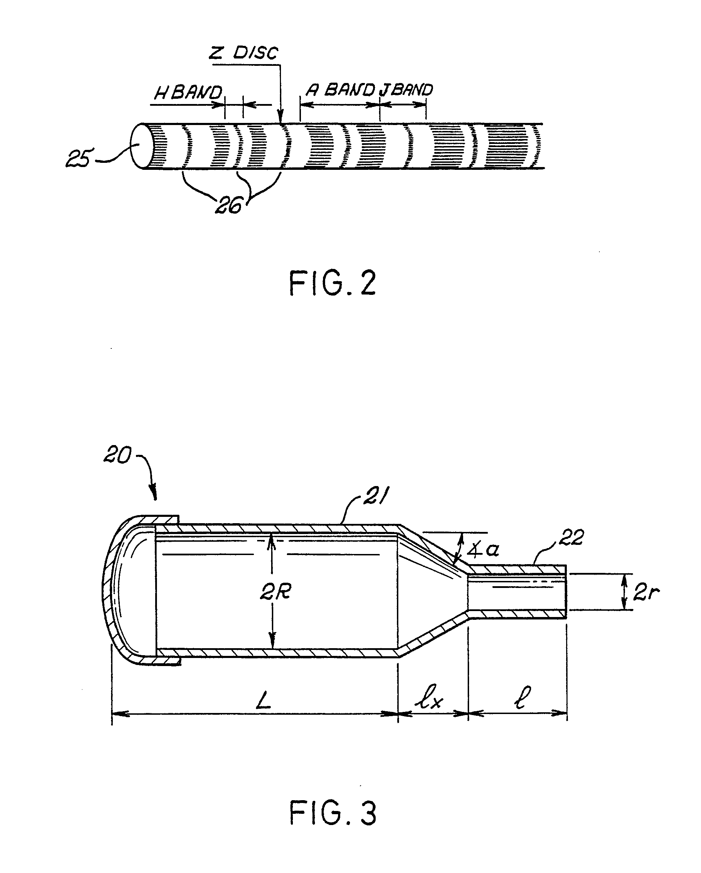

A laboratory scale unit for producing the meat analogue of the present invention is shown in Figure 3. This is indicated generally by reference character 20 which depicts a container having a generally cylindrical portion 21 and a generally cylindrical neck 22. Between portions 21 and 22 is a frustroconical length 23. The diameter of the generally cylindrical portion 21 is indicated by the letter "R" and the length of this section is indicated by the letter "L". The area of the frustroconical portion is indicated by angle "a" and the radius of neck 22 is indicated by the letter "r". The length of the neck is indicated by the letter "l".

It is useful to define the parameters of the apparatus in terms of the above-defined dimensions to more completely teach this pioneering process.

$$K = \frac{\tan a \; r^2 \, L + 1/2 \, (R - r)^3}{\tan a \; l \; r^2 + (R - r) \, r^2}$$

K = a constant at least 1.5 (see below) where:

a = the angle of the neck of the flask with respect to the side of the flask

r = the radius of the neck of the flask

L = the length of the body of the flask

l = the length of the final sample after expansion

R = the radius of the body of the flask.

It has been found that by the use of an apparatus similar to that shown in Figure 2 that the above formula should equal at least about 1.5 and preferably about 2.0. The above formula illustrates the importance of the relative size between the body and the neck of the apparatus as well as the angle between the body and the neck. While the above formula holds true for the apparatus of Figure 2, it is believed that if the process is carried out on a continuous basis, in an apparatus that looks very unlike Figure 2, then the numbers are likely not to have the same significance. The formula does illustrate, however, the type of orientation which is necessary to create the product of the present invention as well as to carry out the process of the present invention.

Various vegetable proteins may be added to the wheat gluten including wheat flour, soy concentrates, soy flour, soy isolate, defatted soy flours or proteinaceous materials from rapeseed concentrates. Other proteins useful in combination with the wheat gluten include safflower, corn, peanuts, peas, sunflower, cottonseed, coconut, sesame seed, seaweed, rice, cassave, rapeseed, single cell proteins such as yeast, animal proteins such as egg and meat scraps.

As stabilizing and binding agents are not necessary to the practice of the present invention, the resulting product is typically free of agents added to stabilize the product and it is also typically free of agents added to bind the macrofibrils or a combination of a macroscopic fiber structure and microfibrils.

## EXAMPLE 1

A dry powder blend containing 80% vital wheat gluten and 11% wheat flour was mixed with 9% of Vegetable Oil in a Hobart Model N-50 mixer for three minutes at 60 RPM. Next, the water was added by spraying it into the dry powder until 50% by weight had been added to the total mixture. The mixture was then mixed for three minutes at 120 RPM. It is preferred that the pH environment of the product of the present invention be between about pH 3.8 and about 9.0. The mixing speed was then increased to 180 RPM, and the mixer operated for an additional minute to produce a homogeneous, elastic dough.

Dough is transferred to a container (an 800 ml Kjeldahl flask) similar to that shown in Figure 3. In transferring the dough to the flask, a rod is used to push the dough into the chamber of the flask to ensure that there are no voids. The apparatus had a diameter of five inches terminating in a frustroconical section one inch long and having a 30 degree angle with respect to the central axis of the chamber and terminating in a cylindrical exit pipe. The exit pipe had an inside diameter of one inch and a length of nine inches. The volume of the dough should almost fill the volume of the body of the flask up to the point at which the neck begins. The flask is then heated on the outside by any conventional means such as electrical heat or by an oil bath at 135 degrees centigrade. Alternatively, the dough may be heated by microwave energy or a combination of external heat plus microwave energy so that the dough is warmed to a temperature to about 100 degrees centigrade. As the dough reaches 100 degrees centigrade, it begins to expand because of the phase change of the liquid to a vapor and fill the interior of the flask. With continued heating, the dough begins to be extruded out of the neck of the flask until the entire mass of dough is extruded and ejected from the flask through the neck. The resulting extruded product has a visually discernible macroscopic fiber texture very unlike the texture of the starting dough and appears remarkably similar to meat protein.

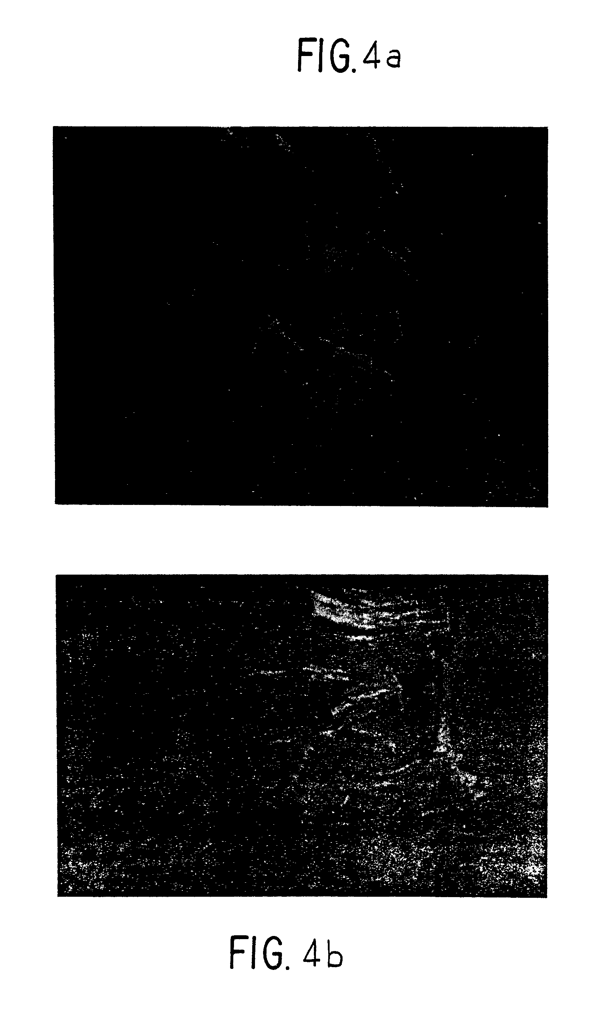

Turning now to Figure 4, a sample of chicken breast is shown; and in Figure 4a a sample of protein made by the above-described procedure is also shown adjacent to the chicken in Figure 4b. The outward appearance of the product is very similar to chicken and the mouth feel and texture is also very similar. The product of example 1 can be cut with a knife and a fork in a manner indistinguishable from chicken, and the mouth feel is also identical to chicken. The unflavored product has a mild pleasant flavor unlike the strong flavor of soy analogues. Flavorants can be added to duplicate the flavor of almost any meat including poultry, fish, beef and the like.

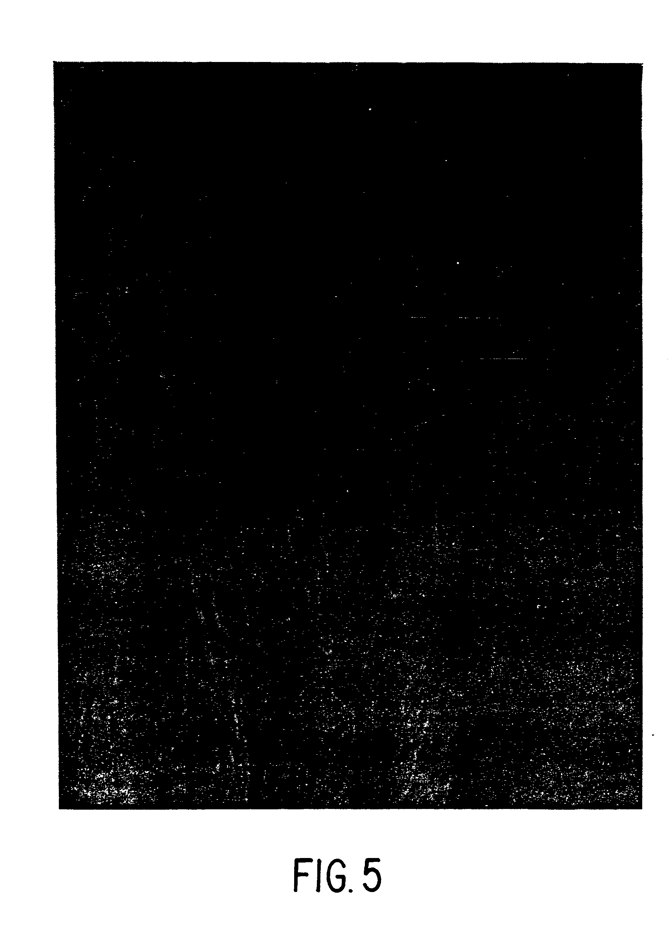

The side of a portion of a sample of the analogue made according to Example 1 was viewed under a scanning electron microscope as shown in Figure 5 under a magnification of 750 x enlarged to 3000 x. It will be noted that microfibrils are very evident and the width of a typical microfibrils is marked on the drawing and was determined to be 2.7 microns in width. The microfibrils are highly oriented and are very unlike the structure exhibited in vegetable protein in general.

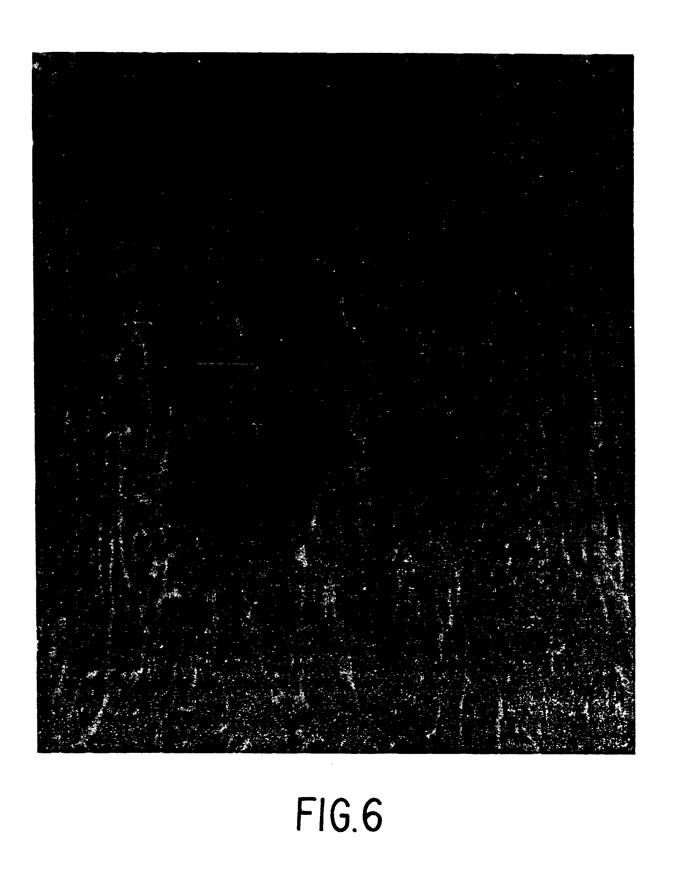

Another sample is shown in Figure 6 also under 750 x magnification enlarged to 3000 x where an end portion of the sample was cut on an angle and a microfibril width of about 2 microns and about 4 microns are indicated in the sample. It can be readily seen that the sample has many cavities along the microfibrils which may account for this remarkable ability to absorb water and be re-hydrated after drying.

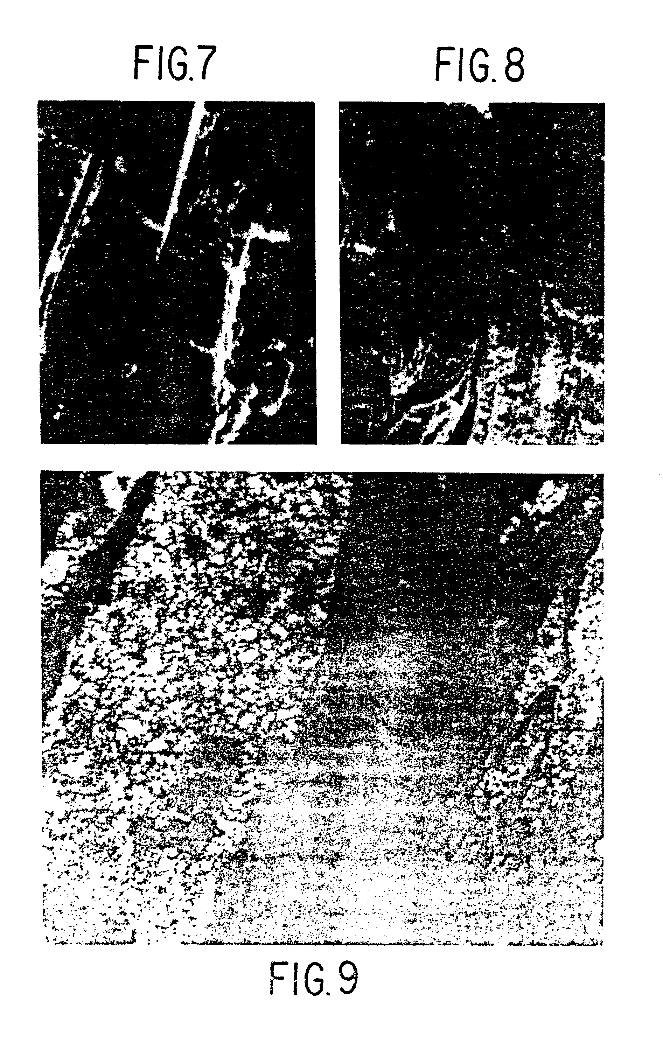

Figure 7 shows a portion of chicken meat magnified 1,000 times by a scanning electron microscope. Figure 8, adjacent to Figure 7, is a view of the meat analogue made by the process of the present invention also magnified 1,000 times. The bundles of microfibrils are almost identical with the natural chicken meat. A sample of the analogue was viewed at a very high magnification as shown in Figure 9 by a transmission electron microscope, and the analogue fiber can be seen along the right one-third of the photomicrograph.

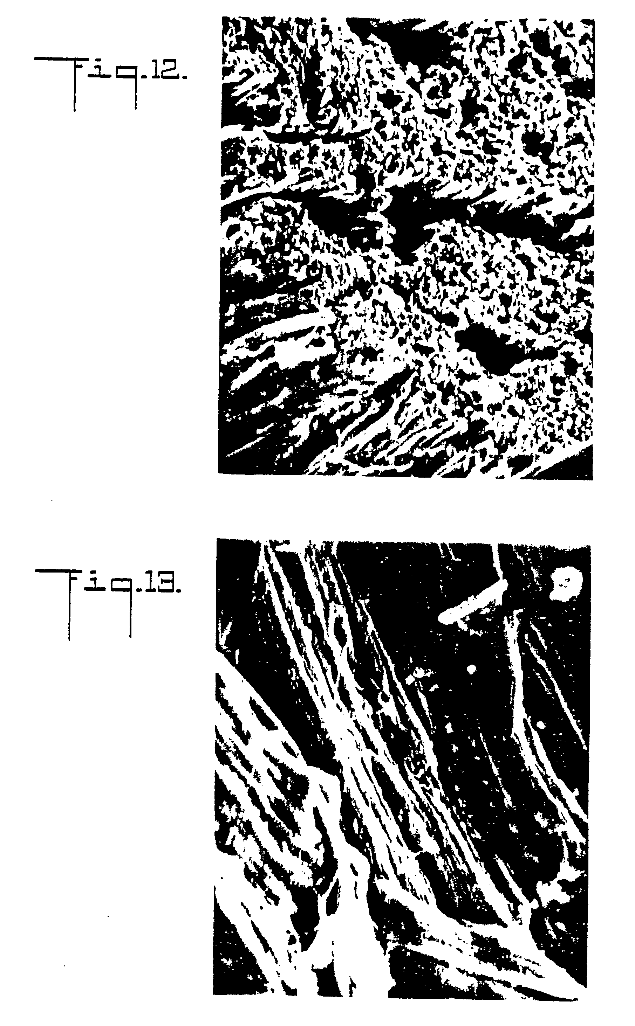

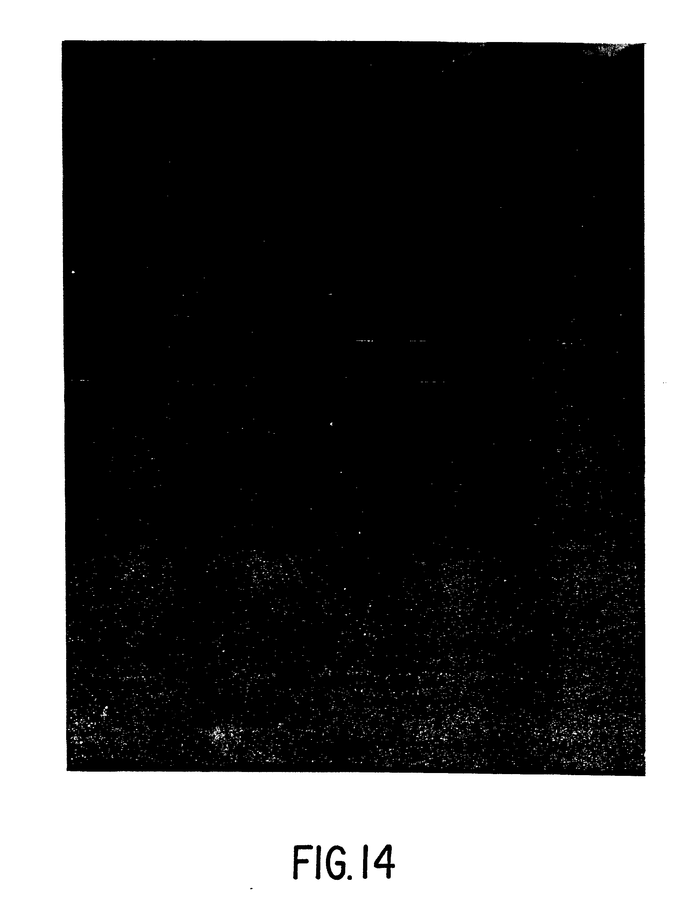

Figure 12 shows the end of a length of the product of the process of the present invention at a magnification of 1,500 x and Figure 13 shows a section of another product of the present invention at a magnification of 5,000 x. Figure 14 shows a further magnification of the analogue of Figure 13 and in the lower left-hand corner of Figure 14, it can be readily seen that even the microfibrils themselves are made up of groups of yet smaller fiberlike material similar to muscle tissue. Figure 14 is at a magnification of 10,000 x enlarged to 40,000 x.

By varying the conditions of manufacture of the meat analogue, different macroscopic fiber and microfibril structures (having different macroscopic fiber and microfibrilar size and density) can be obtained so that different types of meat can be duplicated. Microfibril diameters of between 0.1 and 30 microns may be obtained.

Also, by varying a wheat and non-wheat protein formulation, others have demonstrated a synergistic effect in the resulting PER.

By increasing the compression to expansion ratio, for example by increasing the angle "a" at the exit of the flask or by decreasing the diameter of the cylindrical portion "21" of the flask, both of Figure 3, the microfibril diameter decreases, the microfibril length increases and the resulting product has a high microfibrilar density. On the other hand, by decreasing the compression to expansion ratio by, for example, decreasing the angle "a" or by increasing the diameter "21", the microfibrils become larger in diameter but shorter in length, the space between them increases and a more tender analogue results which has a lower microfibrilar density. The use of additives is also available to assist the duplication of various types of meat.

EXAMPLE 2

A dry powder blend containing 70% vital wheat gluten, 15% soy flour, 6% wheat flour, 5% casein and 4% baking powder was blended for three minutes. Water and then sprayed into the dry mix until the water content had reached 48% by weight. The mixing conditions and time were the same as described in Example 1. A homogeneous dough was transferred to a Kjeldahl flask and heated by submersion in an oil bath at 135 degrees centigrade. After several minutes, the dough expanded and was gradually forcibly ejected through the neck of the flask.

The amount of relaxation time between the mixing of the moisture in the dough and the heating and expanding steps should be kept short, preferably no more than about twenty minutes and preferably less than ten minutes.

It is important to note that the product of the present invention is unlike any product which has existed heretofore. That is, although its structure as viewed under an electron microscope exhibits the same elongated microfibrils including, bundles of microfibrils as exist in natural meat, the product of the present invention lacks the vertical banding present in natural muscle fiber. A myofibril from natural muscle fiber is shown schematically in Figure 2 and indicated by reference character 25. See e.g., J.A. Wilson, PRINCIPLES OF ANIMAL PHYSIOLOGY, Macmillan Company, New York (1972) 339-46. The vertical bands 26 surround the myofibril only in the natural product and not in the product of the present invention. Figure 9 shows the product of the present invention under a high magnification of 25,000 x, enlarged to 50,000 x, which does not show any vertical bands but does still contain microfibrils similar to the myofibrils shown in Figure 2, but without the vertical bands. In addition, the product of the present invention does not inherently contain animal fat, however such ingredient may be added for flavor. Furthermore, the product of the present invention differs from prior meat analogues in that its microfibrils have a diameter in the range of micron size (from about one-tenth to about 30 microns).

This example can be repeated using a finely divided, usually emulsified, meat in the formulation such as chicken or beef.

EXAMPLE 3

A dry powder blend containing 50% wheat gluten, 45% by weight of soy flour and 5% by weight of wheat flour was mixed with 8% of corn oil in a Hobart brand of mixer Model No. N-50 for three minutes at 60 RPM. Water was added as shown in Example 1 until 54% by weight of the total mixture was water. A small amount of chicken flavor and MSG were added for flavor and the dough was treated in a manner identical with that shown in Example 1. The resulting dough after it exited the flask had a fiber texture and flavor which very closely resembled the white meat of chicken.

A major advantage of the product of the present invention as compared to prior art meat analogues is that the product of the present invention may be readily re-hydrated after being dried. In its dried state, it has exceptional shelf life and it can be kept for long periods of time without refrigeration. Vast amounts of meat analogue may be stored at low cost without fear of spoilage and readily reconstituted is also a remarkable feature of the product of the present invention. A sample having been dried and stored for many months was placed in a glass of water at room temperature and after several minutes was removed and had the consistency of the white meat of chicken. It is believed this ability results from the fibrous nature of applicant's product which is unlike the generally cell-like structure of most prior art products.

Other modifications of the process will change the characteristics of the final product. As stated above, the consistency and toughness of the product may be varied so that both a delicate fish-like consistency or a tough beef jerky type consistency may be manufactured. The macroscopic fiber size and density, and the microfibril size and density of the product produced by the process of the present invention can be modified in order to duplicate the different types of muscle. For example, chicken and turkey both have small myofibrils in the order of a few microns in diameter and of high density. Beef and pork have larger myofibrils and a lighter density. It is also possible to change the toughness of the product by varying the starting formulation and by increasing the pressure exerted in two dimensions.

EXAMPLE 4

The procedure in Example 3 was duplicated utilizing starting dry ingredients consisting of 40% by weight of wheat gluten and 60% by weight of soy flour. No oil was added and the resulting product exhibited meat-like fibers, and had a high degree of chewiness and was highly resistant to retorting.

EXAMPLE 5

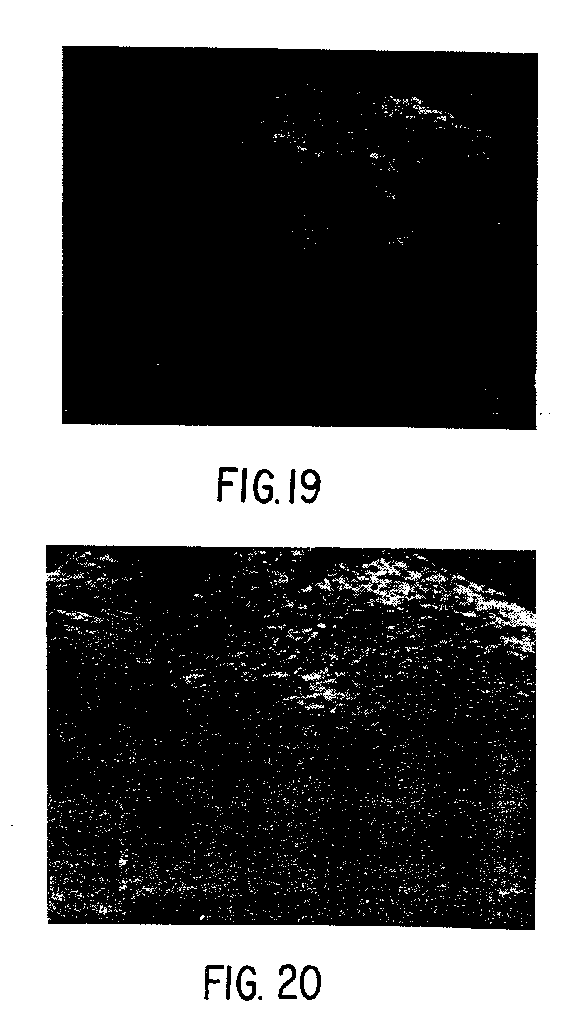

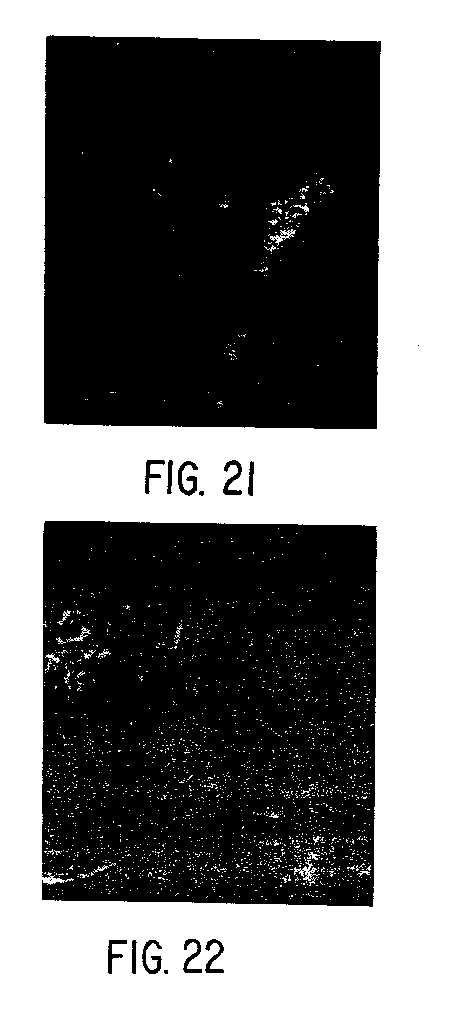

A dry powder blend containing, on a weight basis, 50% wheat gluten, 10% soy flour and 40% wheat flour was mixed with, based on the total weight of the dry ingredients, 8.3% vegetable oil and a mass of water having a weight equal to that of the dry ingredients. The dry and liquid ingredients were mixed as described in Example 1 to form a substantially homogenous dough. A layer of dough about three-quarter inch in depth was deposited onto a standard baking tray and the tray was transferred to a hot air oven preheated to about 400°F. Heating was continued for about 20 minutes during which time the dough expanded to more than triple its initial volume. The product was removed from the oven and permitted to cool in a room temperature environment for about five minutes, at which time the product was cut into 3/4 inch cubes and allowed to further cool to ambient temperature. The product contained many visually discernible voids, i.e., it had a cellular structure, and lacked macroscopic parallel, cylindrical fibers, see Figs. 19 and 20. Upon examination by scanning electron microscopy, microfibrils were not observed in the product of this Example. See Figs. 21 and 22.

EXAMPLE 6

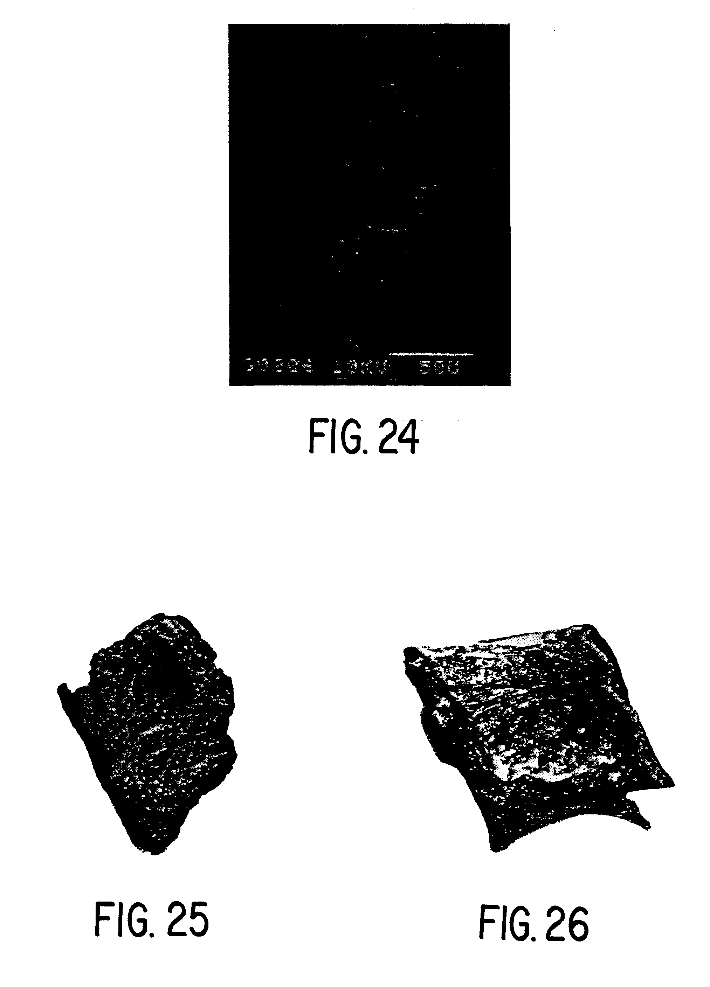

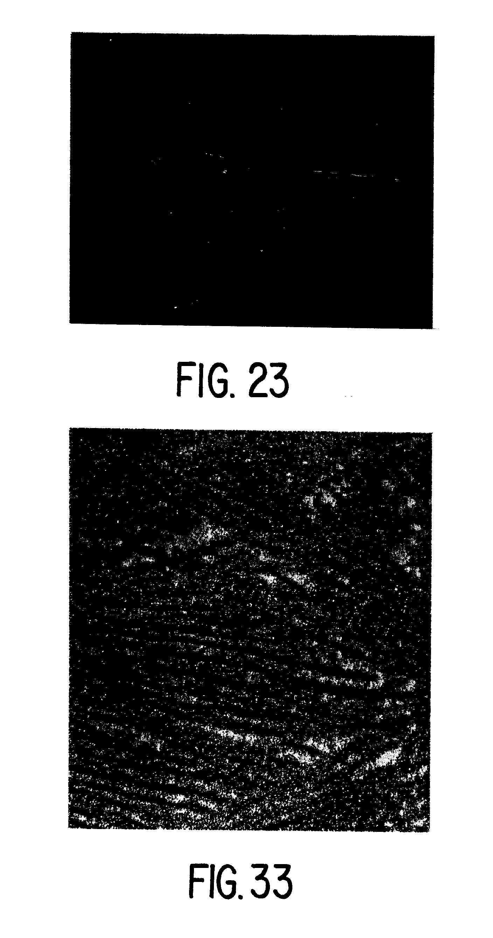

100 grams of a homogeneous dough as described in Example 5 was placed in a 180 ml. tall beaker. The beaker placed in boiling water for about one hour. After the hour's heating, the dough had expanded by about 150%. Upon examination, the product was found to have, on a macroscopical scale a cellular type structure, see Fig. 23. Again, no microfibrils were observed under scanning electron microscopy See Fig. 24.

EXAMPLE 7

A homogeneous dough as described in Example 5 was force fed into a 3/4 inch Brabender food extruder at a rate sufficient to keep the barrel full. The extruder had a 15:1 L:D grooved barrel and a 1.5:1 compression ratio screw auger fitted with a 150° torpedo which was operated at 125 RPM. The extruder barrel was heated to 160°C while the die plate was heated to 166°C. The extrudate was recovered, frozen and kept frozen until examined microsciply.

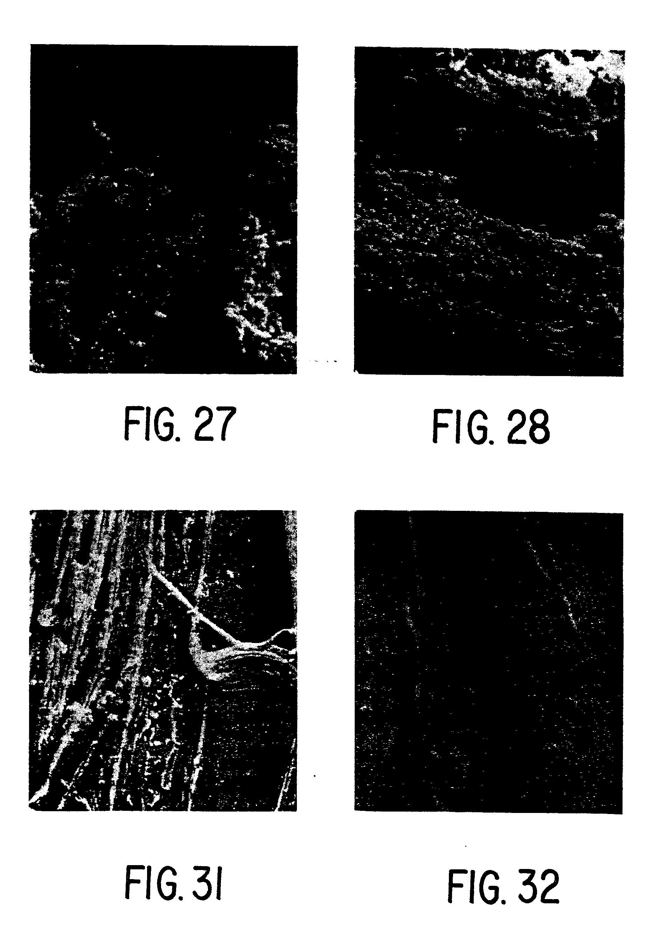

The resulting product comprised doughy portions which lacked apparent macroscopic fibers, as well as some portions that contained macroscopicly discernable fibers. See Figs. 25 and 26. These macroscopicly discernable fibers were both parallel and a-parallel. SEM examination of the macroscopic fibers failed to reveal the presence of microfibrils. See Figs. 27 and 28.

EXAMPLE 8

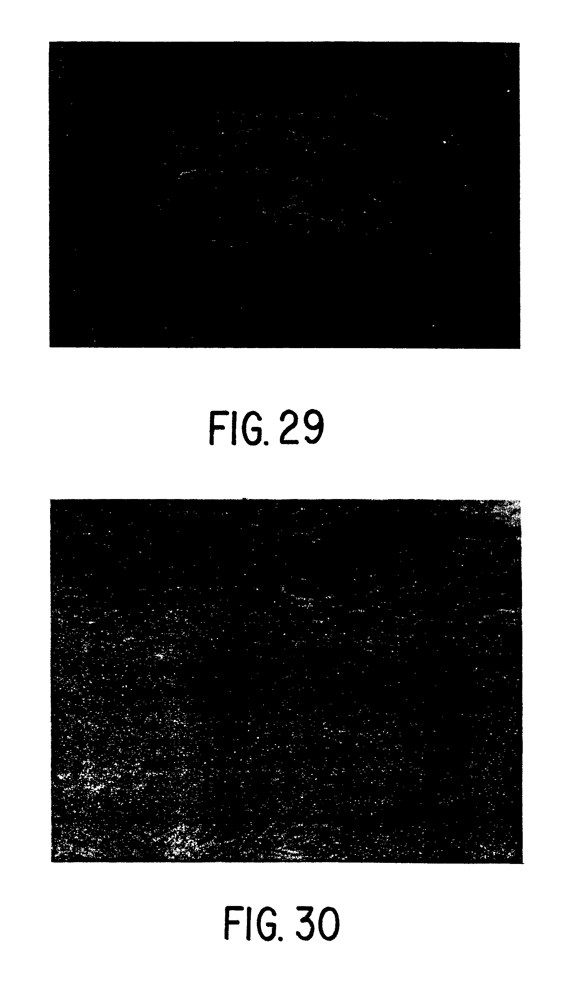

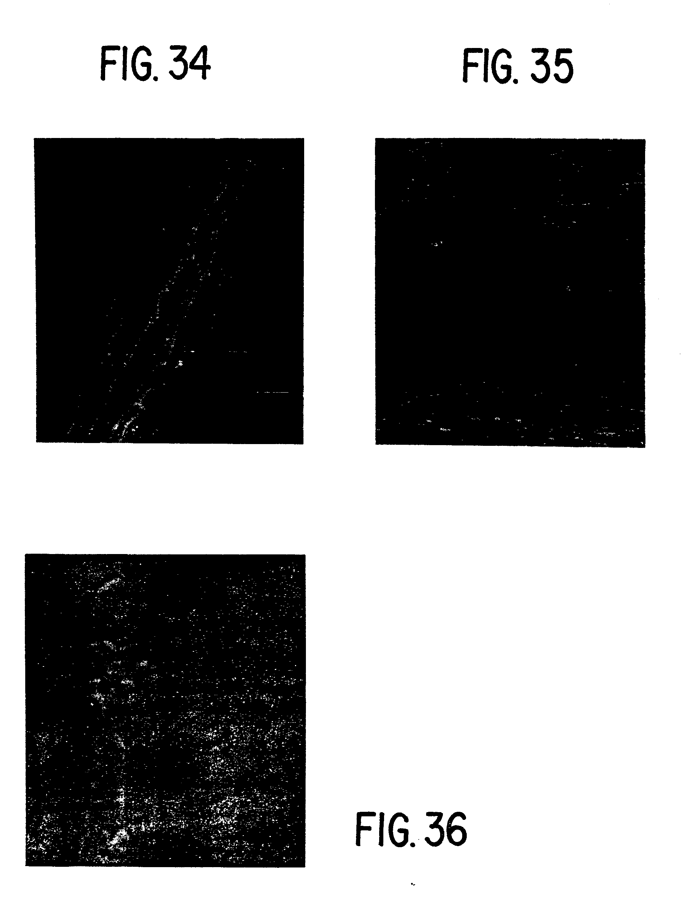

Approximately 200 ml of a homogeneous dough as described in Example 5 was processed in a 250 ml volumetric flask according to Example 1 except that the flask with the dough was immersed in an 80°C oil bath which was heated to 120°C over the course of an hour. The resulting product comprised a small end section lacking macroscopic fibers while the bulk of the product consisted essentially of a macroscopic, cylindrically shaped, parallel fiber structure, Figure 29, which when torn apart tended to tear into sheets of

12

these parallel fibers although, prior to tearing, a sheet like structure was not identifiable in the composite of the macroscopicly discernable fibers. Figure 30. Upon examination via SEM, the product revealed a microfibril structure. Figures 31 and 32. These microfibrils were substantially cylindrical, substantially aligned and appeared to have substantially uniform cross-sectional diameters of about 1.5 microns. Figure 32. A transmission electron photomicrograph taken at 150,000 x magnification revealed several sets of substantially aligned, approximately straight lines. Figure 33. Within each such set of these approximately straight lines, the lines had an approximately uniform diameter, length, shape and inter-line spacing. These lines also appear to be structurally similar to the myofilament lines of muscle tissue as observed through transmission electron microscopy.

When adapted and repeated in a 100 ml volumetric flask 1 micron diameter microfibril were observed. Figures 34, 35 and 36.

The present embodiments of this invention are thus to be considered in all respects as illustrative and not restrictive, the scope of the invention being indicated by the appended claims rather than by the foregoing description. All changes which come within the meaning and range of equivalency of the claims therefore are intended to be embraced therein.


## Claims

1. A process for preparing a meat analogue from vegetable protein comprising the steps of:
preparing a mixture of at least 20% vital wheat gluten in the dry ingredients thereof and at least 25% water and no more than about 65% water of the total mixed ingredients;
heating said mixture to about the boiling point of the liquid portion of said mixture;
permitting said mixture to expand in three dimensions so that the volume of the mixture is increased by at least 35% in excess of the original volume; and
orienting the mixture by forcing the expanded mixture inwardly in two dimensions while allowing free movement in the third dimension to affect a reduction in cross-sectional area by at least 25% of the original cross sectional area.

2. The process of Claim 1 wherein the mixture is formed by spraying water on dry ingredients while mixing.

3. The process of Claim 1 wherein the dough is formed by mixing the dry ingredients with water at a high mixer speed.

4. The process of Claim 1 wherein the mixture is placed in a confined chamber after the mixing step and before the heating step, said confined chamber having sufficient volume to permit an initial three dimemsional expansion and having an exit opening smaller than the chamber so that when the mixture is forced through the exit opening it is so compressed in two dimensions and allowed to move freely in the third dimension.

5. The process of Claim 3 further including a smooth section located between said confined chamber and angled inward toward the exit opening thereof.

6. The process of Claim 4 wherein said smooth section has an angle of between 10 degrees and 60 degrees with respect to the longitudinal axis thereof.

7. The process of Claim 5 further including a smooth exit passageway affixed to the smooth section, said smooth exit passageway being at least as long as the smooth section.

8. The process of Claim 1 wherein the mixture is expanded at least 50% in excess of its original volume.

9. A process for preparing a meat analogue from vegetable protein comprising the steps of:
preparing a mixture of at least about 10% vital wheat gluten in the dry ingredients thereof and at least 25% water and no more than about 65% water of the total mixed ingredients in a manner effective to form a dough;
heating said dough to about the boiling point of the liquid portion of said dough;
permitting said dough to expand in three dimensions so that the volume of the dough is increased by at least 35% in excess of the original volume; and
orienting the dough by forcing the expanded dough inwardly in two dimensions while allowing free movement in the third dimension to affect a reduction in cross-sectional area by at least 25% of the original cross sectional area.

10. A foodstuff comprising a plurality of substantially aligned, substantially cylindrical microfibrils, each of said microfibrils having a diameter of less than about 15 microns, said microfibrils being substantially free from agents added to stabilize said microfibrils, and said microfibrils comprise gluten.

11. A foodstuff according to Claim 10 wherein said microfibrils comprise, on a dry weight basis, at least about 36 percent wheat gluten.

12. A foodstuff according to Claim 10 wherein said microfils comprise, on a dry weight basis, at least about 36 percent wheat gluten.

13. A foodstuff according to Claim 11 which further comprises a bundle of said microfibrils and said bundle has cross-sectional area stability index of at least about $20mm^2$.

14. A foodstuff according to Claim 11 which further comprises a bundle of said microfibrils and said bundle has a cross-sectional area stability index of at least about $1cm^2$.

15. A foodstuff according to Claim 11 which further comprises a bundle of said microfibrils and said bundle has a cross-sectional area stability index of at least about $2cm^2$.

16. A foodstuff according to Claim 11 which further comprises an ability to maintian its meat-like visual appearance upon heating.

17. A foodstuff according to Claim 11 which further comprises an ability to maintain its meat-like visual appearance upon being retorted.

18. A foodstuff according to Claim 11 which further comprises a visually discernible macroscopic fiber structure.

19. A foodstuff according to Claim 11 which further comprises a rehydration index of at least about 0.7.

20. A foodstuff according to Claim 11 which further comprises a microfibril length stability index of at least about 30mm.

21. A foodstuff according to Claim 11 which further comprises a microfibril length stability index of at least about 10cm.

22. A foodstuff according to Claim 11 which further comprises a rehydration index of at least about 1.0.

23. A foodstuff according to Claim 11 wherein said foodstuff further comprises microfibrils having a substantially uniform cross-sectional diameter.

24. A foodstuff comprising a bundle of substantially aligned, substantially cylindrical microfibrils, having a visually discernible macroscopic fiber structure, each of said microfibrils having a diameter of less than about 30 microns, said microfibrils being substantially free from agents added to stabilize said microfibrils, said microfibrils comprising, on a dry weight basis, at least about 36 percent wheat gluten, said bundle having a cross-sectional area stability index of at least about 1 $cm^2$, and a length stability index of at least about 30mm.

25. A foodstuff according to Claim 24 which further comprises a rehydration index of at least about 0.7.

26. A foodstuff comprising a bundle of substantially aligned, substantially cylindrical microfibrils having a visually discernible macroscopic fiber structure, each of said microfibrils having a diameter of less than about 15 microns, said microfibrils comprising, on a dry weight basis, at least about 36 percent wheat gluten, said bundle having a cross-sectional area stability index of at least about $1cm^2$, and a length stability index of at least about 30mm.

27. A foodstuff according to Claim 26 which further comprises a rehydration index of at least about 0.7.

28. A foodstuff according to Claim 26 which further comprises an ability to maintain its meat-like appearnace upon being retorted.

29. A foodstuff according to Claim 28 which further comprises a rehydration index of at least about 0.7.

30. A foodstuff according to Claim 28 which further comprises a rehydration index of at least about 1.0.

31. A foodstuff comprising a plurality of substantially aligned, substantially cylindrical microfibrils, each of said microfibrils having a diameter of less than about 15 microns, and said comestible has a rehydration index of at least about 0.7.

32. A foodstuff according to claim 31 wherein said microfibrils comprise on a dry weight basis, at least about 10 percent gluten.

33. A foodstuff according to claim 31 wherein said microfibrils comprise, on a dry weight basis, at least about 45 percent wheat gluten.

34. A foodstuff according to claim 31 which further comprises a visually discernible macroscopic fiber structure.

35. A foodstuff comprising a meat analogue having an outward appearance of meat as well as fibers, at least 20% of the dry ingredients of said fibers consists of wheat gluten and said fibers have diameters of micron size.

14

FIG. 1a.   FIG. 1b.   FIG. 1c.

FIG. 1.

**FIG. 2**

**FIG. 3**

## FIG. 4a

## FIG. 4b

0 262 276

FIG. 5

FIG.6

FIG.7    FIG.8

FIG.9

Fig. 11.

Fig. 10.

Fig.12.

Fig.13.

FIG.14

Fig. 15.

Fig. 16.

FIG. 17

FIG.18

FIG. 19

FIG. 20

FIG. 21

FIG. 22

FIG. 24

FIG. 25

FIG. 26

FIG. 23

FIG. 33

FIG. 27

FIG. 28

FIG. 31

FIG. 32

FIG. 29

FIG. 30

FIG. 34

FIG. 35

FIG. 36

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 645 747  (H.C. PALMER)<br>* claims 1, 5 * | 1 | A 23 J    3/00<br>A 23 L    1/31 |
| Y | GB-A-1 283 112  (KAL KAN FOODS INC.)<br>* claims 1-5 * | 1 | |
| D,A | US-A-4 275 084  (S. OHYABU et al.)<br>* claims 1, 3 * | 1 | |
| A | US-A-3 988 485  (H.R. HIBBERT et al.)<br>* abstract, claims 1, 2 * | 1 | |
| A | US-A-3 982 004  (S. OBATA et al.)<br>* abstract, claims 1, 2 * | 1 | **TECHNICAL FIELDS SEARCHED (Int. Cl.4)**<br><br>A 23 J    3/00<br>A 23 L    1/00 |

The present search report has been drawn up for all claims

| Place of search | Date of completion of the search | Examiner |
|---|---|---|
| BERLIN | 20-05-1987 | SCHULTZE D |